# EUROPEAN PATENT SPECIFICATION

(11) **EP 3 075 791 B1**
(45) Date of publication and mention of the grant of the patent: **14.11.2018**
(21) Application number: 15305492.9
(22) Date of filing: 02.04.2015
(51) Int. Cl.: C09D 7/40, C09D 7/00, C09D 1/00, C09D 201/00, C09D 5/36

(54) **SPARKLING CLEAR COAT COMPOSITION IN THE AUTOMOTIVE FIELD**
GLITZERNDE KLARLACKZUSAMMENSETZUNG IM KFZ-BEREICH
COMPOSITION DE REVÊTEMENT TRANSPARENTE MOUSSEUSE DANS LE DOMAINE DE L'AUTOMOBILE

(43) Date of publication of application: 05.10.2016
(73) Proprietor: Bollig & Kemper GmbH & Co. KG, 50827 Köln (DE)
(72) Inventor: Roland, Jean-François, 38320 Brié et Angonne (FR)
(74) Representative: RCD Patent Giesen, Schmelcher & Griebel Patentwanwälte PartG mbB

(56) References cited:
- EP-A1- 1 038 931
- JP-A- 2001 162 219
- JP-A- 2004 081 971

## Description

The invention relates to the field of sparkling clear coat compositions for special effect automotive coatings.

Since many years there is a growing interest in the automotive field for coatings having a brilliant appearance and a high degree of luster and sparkle. In order to achieve coatings of such high quality appearance generally a wide variety of special effect pigments are used. Special effect pigments range from metal flake pigments like aluminum based pigments over mica and pearlescent pigments to glass flake pigments. However, in practice the pigments nearly always are included in the base coat layer of the multilayer automotive coating.

In principle, the higher the amount of special effect pigment present in the base coat, the higher is the degree of sparkle achieved in the final coating. Like that, there is however a limit of the degree of sparkle and luster that can be achieved because the amount of pigment that can be included in the coating composition is generally limited at least by the factors of large scale industrial applicability and price.

It is also known from the patent literature that there is the possibility of including pigments in the clear coat of a multilayer coating for automotive applications. An example of incorporating glass flake pigments in a powder clear coating is described in US 5,368,885 A. However, the pigmented clear coats have not found their way into being used in the industry which can be explained, for instance, by problems of their application to the car bodies with the standard application technics used in high volume production or in some other factors like a short shelf life or problems in their adhesion to the underlying base coat layers.

Another approach for achieving a high sparkle effect is described in JP 2004081971 A and in JP 2001162219 A. There is provided a method for forming a brilliant coating film capable of developing a three-dimensional glittering luminance feeling having interfering action and a coated article. For this, a brilliant coating film is formed by successively applying (1) a process for forming a brilliant base coating film on a base material, (2) a process for forming at least one brilliant pigment-coating clear coating film containing a metal oxide coated glass flake pigment and (3) a process for forming a clear topcoating film. Or, the method includes forming the coating comprises the steps of forming a color base coating layer with an L value of 1-40 on a base material to be coated, and forming on the color base coating the glittering clear coating layer containing 0.001-5 mass % metal covered glass flake pigment in a dry coating, and then forming a top clear coating layer on the glittering clear coating layer. However, a top clear coating layer is still applied over the layer with the sparkling effect which itself does not have any pigments.

In another aspect, the use of glittering effect pigments is also described in EP 1 038 931 A1 which relates to aqueous glittering ink compositions being based on water-soluble resins. The glittering ink composition of the EP 1 038 931 A1 contains a glass flake pigment, a water-soluble resin, a water-soluble organic solvent and water as essential ingredients. The content of the glass flake pigment is 0.01 - 40% by weight relative to the total amount of the ink composition. Moreover, the ink composition contains a synthetic resin emulsion as a binder component for fixing the glass flake pigment to a handwriting or a coated film in 0.01 - 40% by weight in solids relative to the total amount of the ink composition. The synthetic resin emulsion has an anionic property or a nonionic property and its minimum film forming temperature is not higher than 20°C.

The object of the present invention therefore is to provide a clear coating composition that gives an outstanding degree of sparkle to a multilayer coating in the automotive field and at the same time is suitable for being used in industry applications. Like that, the clear coat of the present invention should have a good shelf life, show a good adherence to the underlying base coat, and should be able to being applied with standard application methods and application gear.

The object is achieved by an automotive coating comprising
- a primer layer and a base coat layer, or
- a first base coat layer and a second base coat layer applied on top of the first base coat layer, or
- a first base coat layer, a second base coat layer applied on top of the first base coat layer, a third base coat layer applied on top of the second base coat layer,
and a clear coat layer made of a clear coating composition, wherein the clear coating composition is a liquid clear coating composition comprising a binder, a liquid carrier, and at least one effect pigment, wherein the liquid carrier is selected from the group comprising water, organic solvents or a mixture thereof, and wherein the effect pigment is a platelet glass flake pigment, characterized in that the glass flake pigment is comprised in the clear coating composition in a range between 0.001 weight-% and less than 0.80 weight-%, based on the total weight of the clear coating composition, and that the glass flake pigment has an aspect ratio in the range of 20 to 10,000.

Surprisingly, it was found that very small amounts of a platelet glass flake pigment give an outstanding degree of sparkle and can achieve very attractive luster effects if they are included in a liquid clear coating composition.

Suitable glass flake pigments are favorably such that show a high degree of sparkle and luster. Such sparkle glass flake pigments usually comprise a flake or platelet shaped glass core and a coating of the core. The coating can be varied and/or tinted so that different color shades and brightness shades can be achieved. Such platelet glass flake pigments generally are known to a skilled person and are described, for instance, in WO 2008/122420 A1, in WO 2007/098897 A2, and in WO 2010/060590 A1.
In a preferred embodiment of the present invention the glass flake pigment has an aspect ratio in the range of 200 to 3,000, preferably in the range of 300 to 1,500.
The improved aspect ratio derives from the fact that the glass platelets used in the clear coating composition of the invention have a very small thickness in relation to the size/diameter.
Like that, an improved parallel orientation to the substrate can be achieved which gives a better quality appearance and sparkle of the cured clear coat layer even when very low amounts of the platelet glass pigment are included in the coating.

In another preferred embodiment of the present invention the glass flake pigment has a particle size distribution (according to Malvern) d50 between 10 µm and 250 µm, preferably between 20 µm and 200 µm, most preferably between 25 µm and 150 µm. The size distribution is determined typically via laser granulometry.
Like that, the clear coating composition of the present invention can be applied in a layer thickness that is acceptable for applications in the automotive field. Generally, in the automotive field the interest is keeping the overall thickness of the multilayer coating including the clear coating as low as possible whilst at the same time meeting the high quality and durability requirements of the automotive industry.

In another preferred embodiment of the present invention that the glass flake pigment comprises platelets of coated glass flakes, wherein the coating is selected from the group comprising titanium dioxide, tin oxide, iron oxide, silicon dioxide, copper, silver, gold, platinum, aluminum, alumina and mixtures thereof.

With this wide variety of coatings of the glass flakes and their inherently different shades there can be achieved very special effects in the resulting multilayer coating. Not only can a sparkling effect be added to the tone of the underlying base coat, but different highly desirable effects like brightening of the tone of the based coat layer and color mixing like, for example, adding a blue or golden sparkle to a black base coat can also accompany the sparkling effect. With the invention a new dimension of variability in terms of shade and appearance variety can be provided to the color and effect designer, especially for the field of OEM automotive industry coatings.

The clear coatings can involve automotive coatings as well as industrial coatings. Especially preferred are automotive coatings. The clear coating composition of the present invention is a 1K clear coating composition or a 2K clear coating composition.

1K clear coating compositions are generally known to the skilled person. This is a term often used to describe a clear coating that does not require a hardener, catalyst or activator. For example, this term can be used to describe "single-component" or "single formulation" coating compositions.
2K clear coating compositions also are generally known to the skilled person. 2K is a term often used in the industry to describe a coating that needs to be mixed with a crosslinking, hardener, catalyst or activator component which is considered to stand for the second "K" for component. The mixing of the two components usually takes place shortly before the application of the coating to the substrate.

The binders may be curable physically, or thermally or thermally and with actinic radiation. The latter is referred to by those in the art as dual cure.

In the context of the present invention, the term "physical curing" denotes the curing of a layer of a coating material by film formation through loss of solvent from the coating material, with linking within the coating taking place via looping of the polymer molecules of the binders (regarding the term, cf. Römpp® Lexikon, Lacke und Druckfarben, 1998, Georg Thieme Verlag, Stuttgart, Germany, pages 73 and 74, "Bindemittel"). Alternatively, filming takes place by way of the coalescence of binder particles (cf. Römpp®, op. cit., pages 274 and 275, "Härtung"). Normally, no crosslinking agents are required for this purpose. If desired, the physical curing may be assisted by atmospheric oxygen, by heat, or by exposure to actinic radiation.

Where the binders are thermally curable, they may be thermally externally crosslinking or self-crosslinking, especially externally crosslinking. In the context of the present invention, the term self-crosslinking" refers to the property of a binder whereby it enters into crosslinking reactions with itself. A prerequisite for this is that the binders already include both kinds of complementary reactive functional groups that are necessary for thermal crosslinking, or reactive functional groups which are able to react "with themselves". Externally crosslinking, on the other hand, is the term used to refer to those binders in which one kind of complementary reactive functional groups is present in the binder and the other kind in a curing or crosslinking agent. For further details, reference is made to Römpp®, op. cit., "Härtung", pages 274 to 276, especially page 275, bottom.

The binders of the coatings are oligomeric and polymeric resins. By oligomers are meant resins containing at least 2 to 15 monomer units in the molecule. In the context of the present invention, polymers are resins which contain at least 10 repeating monomer units in the molecule. For further details of these terms, reference is made to Römpp®, op. cit., page 425, "Oligomere". Examples of suitable binders are random, alternating and or block, linear and or branched and or comb addition (co)polymers of ethylenically unsaturated monomers, or polyaddition resins and or polycondensation resins. Regarding these terms, reference is made for further details to Römpp®, op. cit., page 457, "Polyaddition" and "Polyadditionsharze (Polyaddukte)", and also pages 463 and 464, "Polyckondensate", "Polykondensation" and "Polykondensationsharze", and also pages 73 and 74, "Bindemittel".

Examples of suitable addition (co)polymers are (meth)acrylate (co)polymers or partially saponified polyvinyl esters, in particular (meth)acrylate copolymers, especially polyurethane modified (meth)acrylate copolymers.

Examples of suitable polyaddition resins and/or polycondensation resins are polyesters, alkyds, polyurethanes, polylactones, polycarbonates, polyethers, epoxy resins, epoxy resin-amine adducts, polyureas, polyamides, polyimides, polyester- polyurethanes, polyether-polyurethanes or polyester-polyether-polyurethanes, especially polyesters and polyurethanes.

Preferably, binders are used which contain carboxyl groups and preferably have an acid number of from 10 to 100 mg of KOH/g of binder and more preferably from 40 to 80 mg of KOH/g of binder. It is also preferred for these binders to have molecular weights of from 500 to 5,000 g/mol.

In a preferred embodiment of the present invention the binder is selected from the group comprising polyacrylate, polyurethane, polycarbonate, polyester, nitrocellulose, alkyd, aminoplast, polyepoxide, polyvinyl, polyisocyanate, and mixtures and/or copolymers thereof.

The coating compositions of the present invention further contain water and/or organic solvent(s) as liquid carriers. The organic solvent(s) are either miscible with water or immiscible with water.

In the context of the present invention, water miscible organic solvents are typical paint solvents which are miscible in any proportion with water, such as ethylene glycol, propylene glycol, butyl glycol and the methyl, ethyl or propyl ethers thereof, ketones such as acetone or diacetone alcohol, cyclic ethers such as tetrahydrofuran or dioxane, or amides such as N.N-dimethylformamide or N-methylpyrrolidone (cf. Paints Coatings and Solvents, edited by Dieter Stoye and Werner Freitag, second edition, Wiley-VCH, Weinheim and New York, 1998, pages 329 and 330).

The organic solvents which are immiscible with water or sparingly miscible with water accommodate preferably less than 10, more preferably less than 9, and in particular less than 8% by weight of water at 20°C, based on water and solvent. Conversely, water accommodates preferably less than 6, more preferably less than 5, and in particular less than 4% by weight, at 20°C, based on water and solvent. Examples of suitable organic solvents immiscible with water or sparingly miscible with water are ketones such as methyl isobutyl ketone, diisobutyl ketone, cyclohexanone or trimethylcyclohexanone, ethers as dibutyl ether, esters such as isopropyl acetate, butyl acetate, ethyl glycol acetate or butyl glycol acetate, or higher alcohols such as hexanol, cyclohexanol, trimethylcyclohexanol or 2-ethyl-1-hexanol (isooctanol) (cf. Paints Coatings and Solvents, edited by Dieter Stoye and Werner Freitag, second edition, Wiley-VCH, Weinheim and New York, 1998, pages 329 and 330).

It is especially preferred that the liquid carrier is selected from the group comprising water, ketones, aliphatic and/or aromatic hydrocarbons, glycol ethers, alcohols, esters, and mixtures thereof.

The coating material of the invention may additionally comprise additives such as nanoparticles or reactive diluents which are curable thermally or with actinic radiation. In the context of the present invention, actinic is electromagnetic radiation, such as near infrared, visible light, UV radiation or X-rays, especially UV and corpuscular radiation such as electron beams. Furthermore the inventive coating composition may contain further additives such as for example UV absorbers like HALS substances, light stabilizers, free-radical scavengers, thermolabile free-radical initiators, photoinitiators and photocoinitiators, crosslinking agents, thermal crosslinking catalysts, devolatilizers, slip additives, polymerization inhibitors, defoamers, emulsifiers, wetting agents, dispersants, adhesion promoters, leveling agents, film forming auxiliaries, rheology control additives (thickeners), flame retardants, siccatives, dryers, antiskinning agents, corrosion inhibitors, waxes and or flatting agents.

Advantageously, the glass flake pigment is comprised in the clear coating composition in a range between 0.003 weight-% and less than 0.70 weight-%, based on the total weight of the clear coating composition, more preferably the glass flake pigment is comprised in the clear coating composition in a range between 0.02 weight-% and 0.60 weight-%, based on the total weight of the clear coating composition, and especially in a range between 0.10 weight-% and 0.40 weight-%, based on the total weight of the clear coating composition.

The selection of electrophoretic anti-corrosion coating, primer, and base coat used in the multilayer coating for automotive coatings comprising a sparkling clear coat according to this invention is not limited but can rather be made from all known coating systems. For example, the primer can be solvent based or waterborne as can the base coating be. The use of waterborne base coats is however preferred.

In another aspect of the present invention the invention relates to a method for producing a clear coating composition according to the invention as described above comprising the steps of
a) providing a dispersion or a solution of a binder in a liquid carrier,
b) adding at least a platelet glass flake pigment to the dispersion or solution, and
c) stirring the resultant mixture for at least 1 minute.

It could be shown that the incorporation of the platelet glass flake pigments in the clear coating composition does not require special steps but can be carried out simply by addition of the pigment powder to the dispersion or solution of the other components of the composition like binder and additives in water or a suitable solvent, but preferably in water. Alternatively, the glass flake pigment powder can first be mixed with the solvent or water and the dispersion of the pigment is added to the liquid mixture of the other components like binders and additives.

The invention is further illustrated by the following examples.

### Examples

### Examples A

A test panel of galvanized rolled steel was coated with a cathodic electrodeposition coat, a primer coat, a base coat of grey shade, and a 2K clear coat. The total film thickness of the multilayer coating was 85 µm.
A1: According to the invention the 2K clear coat layer was prepared from a commercially available 2K clear coat composition by addition of a platelet glass flake pigment, like for example pigments from the Luxan ® series of Eckart® or like metashine® 2025PSTM from Toyo Aluminium®, in amounts starting from 0.001 weight-% and ranging up to 3.0 weight-%, based on the total weight of the liquid clear coat composition, mixing, robot application, and subsequent hardening.
A2: In a comparative example the same multilayer system as in A1 was applied to a test panel, but the glass flake pigments were included in the base coat composition by mixing and the base coat composition carrying the platelet glass flake pigment was subsequently coated with the 2K clear coat composition without any pigments.

### Example B

A test panel of galvanized rolled steel was coated with a cathodic electrodeposition coat, a first base coat, a second base coat of grey shade, and a 2K clear coat. The first base coat had a thickness of 16µm and the second base coat had a thickness of 7 µm. The second base coat composition had a pH of 8.1, a viscosity of 162 mPa·s, and solid content of 23.4 weight-%, based on the total weight of the base coat composition. The total film thickness of the resultant multilayer coating was 95 µm.
B1: According to the invention the 2K clear coat layer was prepared from a commercially available 2K clear coat composition by addition of a platelet glass flake pigment, like for example pigments from the Luxan ® series of Eckart® or like metashine® 2025PSTM from Toyo Aluminium®, in amounts starting from 0.001 weight-% and ranging up to 3.0 weight-%, based on the total weight of the liquid clear coat composition, mixing, robot application, and subsequent hardening.
B2: In a comparative example the same multilayer system as in B1 was applied to a test panel, but the glass flake pigments were included in the second base coat composition by mixing and the second base coat composition carrying the platelet glass flake pigment was subsequently coated with the 2K clear coat composition without any pigments.

### Example C

A test panel of galvanized rolled steel was coated with a cathodic electrodeposition coat, a first base coat, a second base coat of grey shade, a third base coat of grey shade, and a 2K clear coat. The first base coat had a thickness of 15µm and the second base coat had a thickness of 8 µm and the third base coat had a thickness of 4 µm. The base coat composition used in the second and third layers had a pH of 8.1, a viscosity of 150 mPa·s, and a solid content of 21 weight-%, based on the total weight of the base coat composition. The total film thickness of the resultant multilayer coating was 80 µm.
C1: According to the invention the 2K clear coat layer was prepared from a commercially available 2K clear coat composition by addition of a platelet glass flake pigment, like for example pigments from the Luxan ® series of Eckart® or like metashine® 2025PSTM from Toyo Aluminium®, in amounts starting from 0.001 weight-% and ranging up to 3.0 weight-%, based on the total weight of the liquid clear coat composition, mixing, robot application, and subsequent hardening.
C2: In a comparative example the same multilayer system as in B1 was applied to a test panel, but the glass flake pigments were included in the second base coat composition by mixing and the second base coat composition carrying the platelet glass flake pigment was subsequently coated with the 2K clear coat composition without any pigments.

As a 2K clear coat composition in all examples A to C a composition with the following specifics was used:

**Clear coat composition**

| Raw materials | Weight (g) | Supplier |
|---|---|---|
| Setalux® 1767 VV-65 (acrylic polyol) | 31.1 | Nuplex |
| Setalux ®91767 VX-60 (acrylic polyol) | 29.8 | Nuplex |
| TinStab® BL 277 (1% in butyl acetate) (dibutyltin dilaurate) | 0.6 | Akcros chemical |
| Baysilon® OL-17 (2% in butyl acetate) (polyether-modified methylpolysiloxan) | 1.8 | OMG Borchers |
| Byk 306® (silicone-containing surface additive) | 0.3 | Byk chemie GmbH |
| Tinuvin® 1130 (UV absorber) | 0.9 | BASF |
| Tinuvin® 292 (HALS) | 0.6 | BASF |
| Solvesso® 100 (solvent naphtha) | 3.3 | Exxon Mobil |
| Hardener *) | 31.6 | |
| Total | 100 | |

| | | |
|---|---|---|
| *) Hardener composition | | |

| Raw materials | Weight (g) | Supplier |
|---|---|---|
| Desmodur® N 3390 (aliphatic polyisocyanate) | 53 | Bayer |
| Vestanat® T 1890 E (cycloaliphatic polyisocyanate) | 28.9 | Evonik |
| Dowanol® PM acetate | 18.1 | Dow chemicals |
| Total | 100 | |

### Sparkling Test

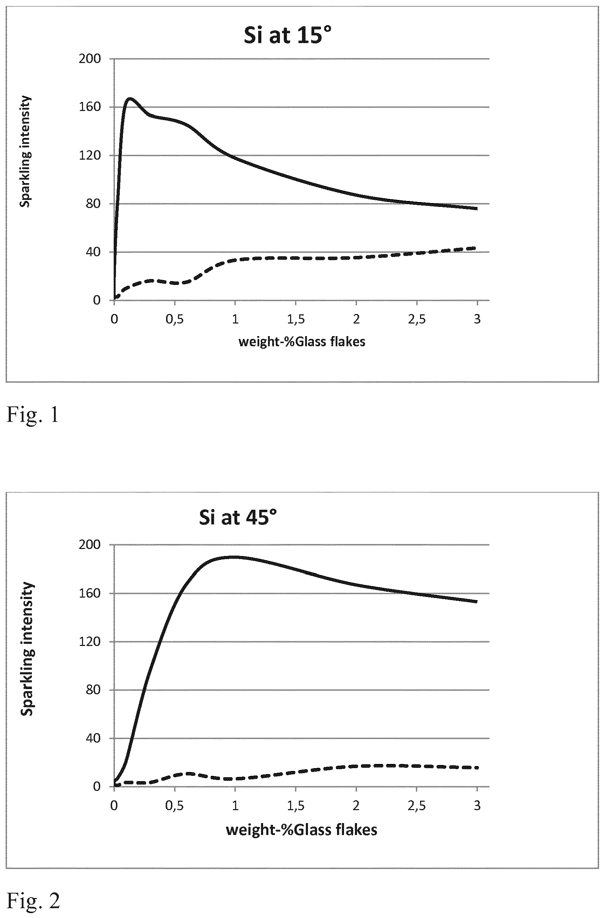

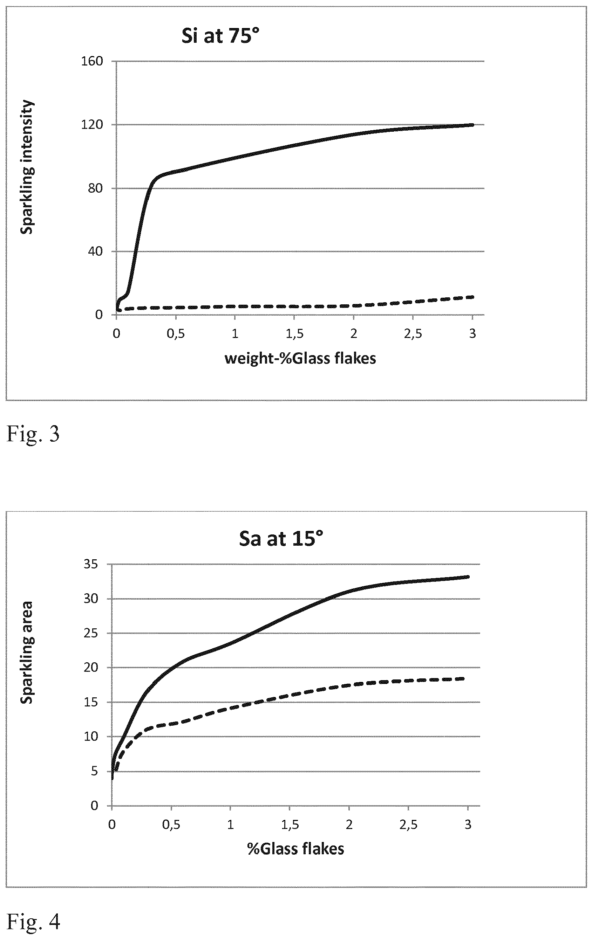

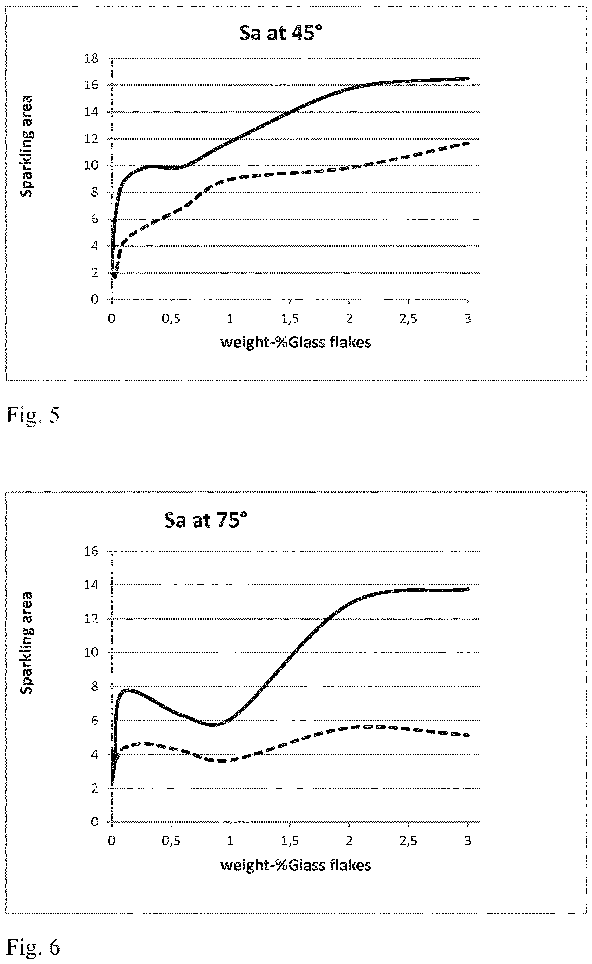

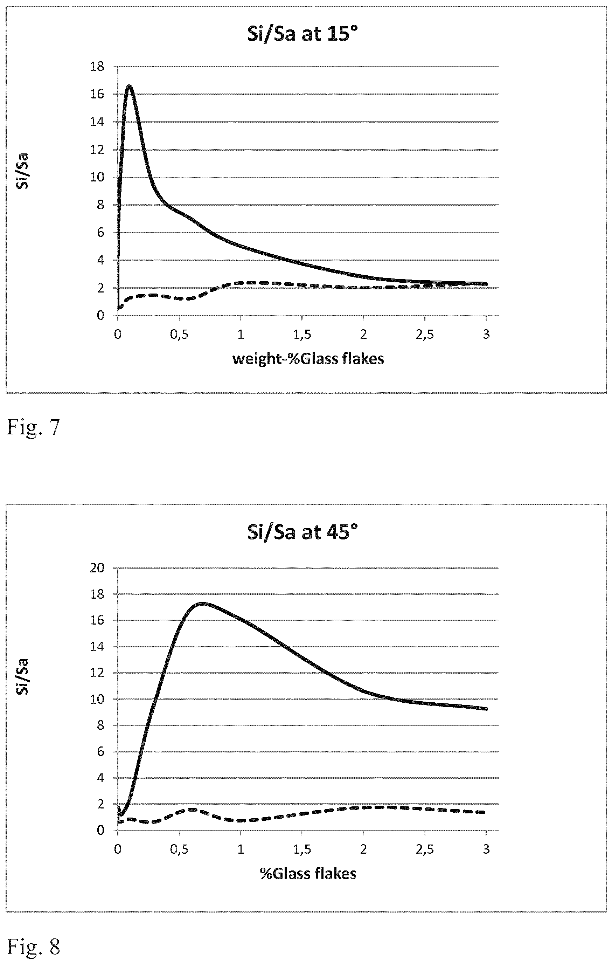

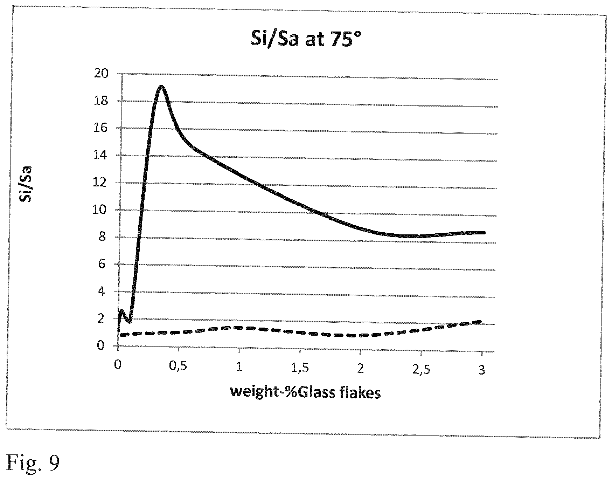

For the example B a sparkling test was carried out to determine the sparkling intensity (Si) and sparkling area (Sa) in three different angles, i.e. at 15°, at 45° and at 75° with a Byk-mac® testing device of BYK-Gardner® GmbH which is based on camera analysis. Sparkling intensity (Si) is a measure of how strong is the light flash of the effect pigment. A total sparkle grade (Si/Sa) is then determined as a function of sparkle intensity and sparkle area. The results of the sparkling test are shown in the figures 1 to 9.

**Table 1: Measures of the sparkling in function of the glass flakes when included in the clear coat = B1**

| | Si | | | Sa | | | Si/Sa | | |
|---|---|---|---|---|---|---|---|---|---|
| x% glass flakes | 15° | 45° | 75° | 15° | 45° | 75° | 15° | 45° | 75° |
| 0 | 2 | 2.25 | 5.41 | 3.95 | 2.86 | 3.44 | 0.51 | 0.79 | 1.57 |
| 0.003 | 28.27 | 4.84 | 4.18 | 4.9 | 2.78 | 2.42 | 5.77 | 1.74 | 1.73 |
| 0.030 | 83.26 | 7.17 | 9.75 | 7.42 | 6.09 | 3.78 | 11.22 | 1.18 | 2.58 |
| 0.10 | 163.57 | 21.16 | 14.61 | 9.87 | 8.76 | 7.72 | 16.57 | 2.42 | 1.89 |
| 0.30 | 153.17 | 96.21 | 82.45 | 16.58 | 9.88 | 4.41 | 9.24 | 9.74 | 18.70 |
| 0.60 | 145.34 | 167.71 | 92.04 | 20.85 | 9.91 | 6.29 | 6.97 | 16.92 | 14.63 |
| 1 | 117.79 | 189.7 | 26 | 23.5 | 11.79 | 6.07 | 5.01 | 16.09 | 4.28 |
| 2 | 87.13 | 166.98 | 113.85 | 31.02 | 15.72 | 12.87 | 2.81 | 10.62 | 8.85 |
| 3 | 75.88 | 152.99 | 119.94 | 33.14 | 16.53 | 13.74 | 2.29 | 9.26 | 8.73 |

| | | | | | | | | | |
|---|---|---|---|---|---|---|---|---|---|
| x = weight-% of total clear coat composition | | | | | | | | | |

**Table 2: Measures of the sparkling in function of the glass flakes when included in the base coat = B2**

| | Si | | | Sa | | | Si/Sa | | |
|---|---|---|---|---|---|---|---|---|---|
| x% glass flakes | 15° | 45° | 75° | 15° | 45° | 75° | 15° | 45° | 75° |
| 0 | 2 | 2.25 | 5.41 | 3.95 | 2.86 | 3.44 | 0.51 | 0.79 | 1.57 |
| 0.003 | 3.08 | 1.63 | 4.12 | 4.96 | 2.46 | 4.22 | 0.62 | 0.66 | 0.98 |
| 0.030 | 3.32 | 1.12 | 2.87 | 4.97 | 1.73 | 3.6 | 0.67 | 0.65 | 0.80 |
| 0.100 | 10.12 | 3.55 | 3.88 | 7.86 | 4.25 | 4.36 | 1.29 | 0.84 | 0.89 |
| 0.30 | 16.31 | 3.5 | 4.52 | 11.06 | 5.52 | 4.61 | 1.47 | 0.63 | 0.98 |
| 0.60 | 15.27 | 10.73 | 4.7 | 12.16 | 6.86 | 4.19 | 1.26 | 1.56 | 1.12 |
| 1 | 33.47 | 6.45 | 5.37 | 14.13 | 8.96 | 3.65 | 2.37 | 0.72 | 1.47 |
| 2 | 35.56 | 16.91 | 5.81 | 17.47 | 9.82 | 5.55 | 2.04 | 1.72 | 1.05 |
| 3 | 43.58 | 15.76 | 11.31 | 18.41 | 11.69 | 5.13 | 2.37 | 1.35 | 2.20 |

| | | | | | | | | | |
|---|---|---|---|---|---|---|---|---|---|
| x = weight-% of total clear coat composition | | | | | | | | | |

For each angle it was found that sparkling intensity (Si), sparkling area (Sa), and total sparkle grade (Si/Sa) are higher for the single measurements of the example B1 multilayer coating system (full lines) than those of example B2 (dotted lines). The total sparkle grade Si/Sa of the examples of the B1 system presents a maximum between 0.003% weight-% and 0.8 weight-% of platelet glass flake pigments, based on the total weight of the clear coating composition, comprised in the applied liquid clear coating composition.

However, whatever is the typical automotive multilayer coating system A, B, or C, the results are identical: The sparkling effect is much more prominent when the glass flakes are included in the clear coat than it is when they are included in the base coat, and the glass flakes amount needed is also much lower, even surprisingly low.

### Optical evaluation, Change in Shade

When added in the clear coat of example A1 and B1 the platelet glass flakes bring a strong effect starting as low as 0.003 weight-% of concentration in the liquid composition, with a shade becoming even lighter with the increase of concentration.
In contrast, when added in the base coat layer of example A2, the glass flakes do not bring about a strong effect, no lightening is observed.
When added in the second base coat layer of example B2 or the third base coat layer in example C2 the effect is much less strong. Only in a high concentration of the glass flakes in the second base coating composition of 3.0 weight-%, based on the total weight of the composition, a comparable shade as in the example B1 and C1 at the same concentration of 3.0 weight-% could be achieved.

### Optical evaluation, Change in Appearance and Tense

It was found that appearance of the test panels with multilayer coatings the examples A1, B1, and C1 stayed good for concentrations of the glass flakes up to 1.0 weight-%. Higher concentrations of the glass pigments in both systems lead to a loss in quality of appearance. It was also found that the final tense was better for the optical evaluation test of examples A1, B1 and C1 compared to that of the examples A2, B2, and C2.

## Claims

1. Automotive coating comprising
- a primer layer and a base coat layer, or
- a first base coat layer and a second base coat layer applied on top of the first base coat layer, or
- a first base coat layer, a second base coat layer applied on top of the first base coat layer, a third base coat layer applied on top of the second base coat layer,
and a clear coat layer made of a clear coating composition, wherein the clear coating composition is a liquid clear coating composition comprising a binder, a liquid carrier, and one effect pigment, wherein the liquid carrier is selected from the group comprising water, organic solvents or a mixture thereof, and wherein the effect pigment is a platelet glass flake pigment, **characterized in that** the glass flake pigment is comprised in the clear coating composition in a range between 0.001 weight-% and less than 0.80 weight-%, based on the total weight of the clear coating composition, and that the glass flake pigment has an aspect ratio in the range of 20 to 10,000.

2. Coating according to claim 1, **characterized in that** the glass flake pigment is comprised in the clear coating composition in a range between 0.003 weight-% and less than 0.70 weight-%, based on the total weight of the clear coating composition.

3. Coating according to claim 1 or 2, **characterized in that** the glass flake pigment is comprised in the clear coating composition in a range between 0.02 weight-% and 0.60 weight-%, based on the total weight of the clear coating composition.

4. Coating according to one of the claims 1 to 3, **characterized in that** the glass flake pigment is comprised in the clear coating composition in a range between 0.10 weight-% and 0.40 weight-%, based on the total weight of the clear coating composition.

5. Coating according to one of the preceding claims, **characterized in that** the glass flake pigment has an aspect ratio in the range of 200 to 3,000, preferably in the range of 300 to 1,500.

6. Coating according to one of the preceding claims, **characterized in that** the glass flake pigment has a particle size distribution according to Malvern d50 between 10 µm and 250 µm.

7. Coating according to one of the preceding claims, **characterized in that** the glass flake pigment has a particle size distribution according to Malvern d50 between 20 µm and 200 µm, preferably between 25 µm and 150 µm.

8. Coating according to one of the preceding claims, **characterized in that** the glass flake pigment comprises platelets of coated glass flakes, wherein the coating is selected from the group comprising titanium dioxide, tin oxide, iron oxide, silicon dioxide, copper, silver, gold, platinum, aluminum, alumina and mixtures thereof.

9. Coating according to one of the preceding claims, **characterized in that** the clear coating composition is a 1K clear coating composition or a 2K clear coating composition.

10. Coating according to one of the preceding claims, **characterized in that** the binder is selected from the group comprising polyacrylate, polyurethane, polycarbonate, polyester, nitrocellulose, alkyd, aminoplast, polyepoxide, polyvinyl, polyisocyanate, and mixtures and/or copolymers thereof.

11. Coating according to one of the preceding claims, **characterized in that** the liquid carrier is selected from the group comprising water, ketones, aliphatic and/or aromatic hydrocarbons, glycol ethers, alcohols, esters, and mixtures thereof.

12. Method for producing a clear coating composition according to one of the claims 1 to 11, comprising the steps of
a) providing a dispersion or a solution of a binder in a liquid carrier,
b) adding at least a platelet glass flake pigment to the dispersion or solution, and
c) stirring the resultant mixture for at least 1 minute.

## Patentansprüche

1. Automobillackierung umfassend
- eine Grundierungsschicht und eine Basislackschicht, oder
- eine erste Basislackschicht und eine zweite Basislackschicht, welche auf die erste Basislackschicht aufgetragen ist, oder
- eine erste Basislackschicht, eine zweite Basislackschicht, welche auf die erste Basislackschicht aufgetragen ist, eine dritte Basislackschicht, welche auf die zweite Basislackschicht aufgetragen ist,
und eine Klarlackschicht, hergestellt aus einer Klarlackbeschichtungszusammensetzung, wobei die Klarlackbeschichtungszusammensetzung eine flüssige Klarlackbeschichtungszusammensetzung ist, umfassend ein Bindemittel, ein flüssiges Lösungsmittel und ein Effektpigment, wobei das flüssige Lösungsmittel ausgewählt ist aus der Gruppe umfassend Wasser, organische Lösemittel und Mischungen daraus, und wobei das Effektpigment ein plättchenförmiges Glasflake-Pigment ist, **dadurch gekennzeichnet, dass** das Glasflake-Pigment in der Klarlackbeschichtungszusammensetzung in einer Menge zwischen 0,001 Gew.-% und weniger als 0,80 Gew.-% enthalten ist, basierend auf dem Gesamtgewicht der Klarlackbeschichtungszusammensetzung, und dass das Glasflake-Pigment ein Seitenverhältnis im Bereich von 20 bis 10.000 hat.

2. Lackierung gemäß Anspruch 1, **dadurch gekennzeichnet, dass** das Glasflake-Pigment in der Klarlackbeschichtungszusammensetzung in einem Bereich zwischen 0,003 Gew.-% und weniger als 0,70 Gew.-%, basierend auf dem Gesamtgewicht der Klarlackbeschichtungszusammensetzung, enthalten ist.

3. Lackierung gemäß Anspruch 1 oder 2, **dadurch gekennzeichnet, dass** das Glasflake-Pigment in der Klarlackbeschichtungszusammensetzung in einem Bereich zwischen 0,02 Gew.-% und 0,60 Gew.-%, basierend auf dem Gesamtgewicht der Klarlackbeschichtungszusammensetzung, enthalten ist.

4. Lackierung gemäß einem der Ansprüche 1 bis 3, **dadurch gekennzeichnet, dass** das Glasflake-Pigment in der Klarlackbeschichtungszusammensetzung in einem Bereich zwischen 0,1 Gew.-% und 0,40 Gew.-%, basierend auf dem Gesamtgewicht der Klarlackbeschichtungszusammensetzung, enthalten ist.

5. Lackierung gemäß einem der vorhergehenden Ansprüche, **dadurch gekennzeichnet, dass** das Glasflake-Pigment ein Seitenverhältnis im Bereich von 200 bis 3.000, bevorzugt im Bereich von 300 bis 1.500, aufweist.

6. Lackierung gemäß einem der vorhergehenden Ansprüche, **dadurch gekennzeichnet, dass** das Glasflake-Pigment eine Partikelgrößenverteilung nach Malvern d50 zwischen 10 µm und 250 µm aufweist.

7. Lackierung gemäß einem der vorhergehenden Ansprüche, **dadurch gekennzeichnet, dass** das Glasflake-Pigment eine Partikelgrößenverteilung nach Malvern d50 zwischen 20 µm und 200 µm, bevorzugt zwischen 25 µm und 150 µm, aufweist.

8. Lackierung gemäß einem der vorhergehenden Ansprüche, **dadurch gekennzeichnet, dass** das Glasflake-Pigment Plättchen aus beschichtetem Glas umfasst, wobei die Beschichtung ausgewählt ist aus der Gruppe umfassend Titandioxid, Zinnoxid, Eisenoxid, Siliziumdioxid, Kupfer, Silber, Gold, Platin, Aluminium, Aluminiumoxid und Mischungen daraus.

9. Lackierung gemäß einem der vorhergehenden Ansprüche, **dadurch gekennzeichnet, dass** die Klarlackbeschichtungszusammensetzung eine 1K Klarlackbeschichtungszusammensetzung oder eine 2K Klarlackbeschichtungszusammensetzung ist.

10. Lackierung gemäß einem der vorhergehenden Ansprüche, **dadurch gekennzeichnet, dass** das Bindemittel ausgewählt ist aus der Gruppe umfassend Polyacrylat, Polyurethan, Polycarbonat, Polyester, Nitrocellulose, Alkyd, Aminoplast, Polyepoxid, Polyvinyl, Polyisocyanat und Mischungen und/oder Copolymeren daraus.

11. Lackierung gemäß einem der vorhergehenden Ansprüche, **dadurch gekennzeichnet, dass** das flüssige Lösungsmittel ausgewählt ist aus der Gruppe umfassend Wasser, Ketone, aliphatische und/oder aromatische Hydrocarbone, Glykolether, Alkohole, Ester und Mischungen daraus.

12. Verfahren zur Herstellung einer Klarlackbeschichtungszusammensetzung gemäß einem der Ansprüche 1 bis 11, umfassend die Schritte:
a) Bereitstellen einer Dispersion oder einer Lösung eines Bindemittels in einem flüssigen Lösungsmittel,
b) Zugeben von mindestens einem plättchenförmigen Glasflake-Pigment zu der Dispersion oder Lösung, und
c) Rühren der Mischung für mindestens 1 Minute.

## Revendications

1. Revêtement automobile comprenant
- une couche de primaire et une couche de revêtement de base, ou
- une première couche de revêtement de base et une deuxième couche de revêtement de base appliquée sur la première couche de revêtement de base, ou
- une première couche de revêtement de base, une deuxième couche de revêtement de base appliquée sur la première couche de revêtement de base, une troisième couche de revêtement de base appliquée sur la deuxième couche de revêtement de base,
et une composition de revêtement transparente à base de liquide comprenant un liant, un solvant liquide et un pigment à effet, le solvant liquide étant choisi dans le groupe comprenant l'eau, les solvants organiques ou un mélange de ceux-ci, et dans lequel le pigment à effet est un pigment en paillettes de verre en plaquettes, **caractérisé en ce que** le pigment en paillettes de verre est compris dans la composition de revêtement transparente dans une plage allant de 0,001% en poids à moins de 0,80% en poids, par rapport au poids total de la composition de revêtement transparente, et dans lequel le pigment en paillettes de verre présente un rapport d'aspect dans la gamme comprise entre 20 et 10.000.

2. Composition selon la revendication 1, **caractérisée en ce que** le pigment en paillettes de verre est compris dans la composition de revêtement transparente dans la gamme comprise entre 0,003% en poids à moins de 0,70% en poids, sur la base du poids total de la composition de revêtement transparente.

3. Composition selon la revendication 1 ou 2, **caractérisée en ce que** le pigment en paillettes de verre est compris dans la composition de revêtement transparente la gamme comprise entre 0,02% en poids à 0,60% en poids, sur la base du poids total de la composition de revêtement transparente.

4. Composition selon l'une des revendications 1 à 3, **caractérisée en ce que** le pigment en paillettes de verre est compris dans la composition de revêtement transparente dans la gamme comprise entre 0,10% en poids à 0,40% en poids, par rapport au poids total de la composition de revêtement transparente.

5. Composition selon l'une des revendications précédentes, **caractérisée en ce que** le pigment en paillettes de verre présente un rapport d'aspect compris dans l'intervalle allant de 200 à 3 000, de préférence dans l'intervalle allant de 300 à 1 500.

6. Composition selon l'une des revendications précédentes, **caractérisée en ce que** le pigment en paillettes de verre présente une distribution granulométrique selon Malvern d50 comprise entre 10 µm et 250 µm.

7. Composition selon l'une des revendications précédentes, **caractérisée en ce que** le pigment en paillettes de verre présente une distribution granulométrique selon Malvern d50 comprise entre 20 µm et 200 µm, de préférence entre25 µm et 150 µm.

8. Composition selon l'une des revendications précédentes, **caractérisée en ce que** le pigment en paillettes de verre comprend des plaquettes de paillettes de verre revêtues, dans lequel le revêtement est choisi dans le groupe comprenant le dioxyde de titane, l'oxyde d'étain, l'oxyde de fer, le dioxyde de silicium, le cuivre, l'argent, l'or, platine, aluminium, alumine et leurs mélanges.

9. Composition selon l'une des revendications précédentes, **caractérisée en ce que** la composition de revêtement transparente est une composition de revêtement transparente 1K ou une composition de revêtement transparente 2K.

10. Composition selon l'une des revendications précédentes, **caractérisée en ce que** le liant est choisi dans le groupe comprenant polyacrylate, polyuréthanne, polycarbonate, polyester, nitrocellulose, alkyde, aminoplaste, polyépoxyde, polyvinyle, polyisocyanate et leurs mélanges et / ou copolymères.

11. Composition selon l'une des revendications précédentes, **caractérisée en ce que** le solvant liquide est choisi dans le groupe comprenant l'eau, les cétones, les hydrocarbures aliphatiques et / ou aromatiques, les éthers de glycol, les alcools, les esters et leurs mélanges.

12. Procédé de production d'une composition de revêtement transparente selon l'une des revendications 1 à 11, comprenant les étapes consistant à:
a) fournir une dispersion ou une solution d'un liant dans un solvant liquide,
b) ajouter au moins un pigment en paillettes de verre en plaquettes à la dispersion ou solution, et
c) agiter le mélange résultant pendant au moins 1 minute.
